# EUROPEAN PATENT APPLICATION

(11) **EP 4 557 704 A1**
(43) Date of publication of application: **21.05.2025**
(21) Application number: 24213381.7
(22) Date of filing: 15.11.2024
(51) Int. Cl.: H04L 67/1095, H04L 67/148, H04L 69/40, H04L 45/00

(54) **METHOD AND APPARATUS FOR USER PLANE GEO REDUNDANCY WITH SESSION CONTINUITY**

(30) Priority: 16.11.2023 IN 202321077939; 14.11.2024 US 202418947066
(71) Applicant: Mavenir Systems, Inc., Richardson, TX 75081 (US)
(72) Inventor: MISHRA, Abhishek, 562125 Bangalore (IN); PADLIKAR, Vipin, 560048 Bangalore (IN); JINDAL, Tamanna, McKinney, Texas, 75070 (US); GUPTA, Rohit, 560035 Bangalore (IN)
(74) Representative: dompatent von Kreisler Selting Werner - Partnerschaft von Patent- und Rechtsanwälten mbB

(57) **Abstract**

A User Plane Function UPF Geographic Redundancy (GR) and Routers on Packet Forwarding Control Protocol Router (PFCP) N4 and General Packet Radio Service Tunneling Protocol (GTPv1) interfaces for a RAN network. A UPF and UPF-GR are connected via a dedicated connection for session and state replication. The UPF-GR is kept in a hot-standby mode, and all the sessions that are created, modified, or deleted at a UPF are also created, modified, and deleted at UPF-GR. The UPF and UPF-GR are also configured with a same N4 IP Address. A Session Management Function (SMF) is connected via a PFCP Router (PFCP-SMF) with PFCP routers of UPF and UPF-GR. A RAN node is connected via a Router (GTPv1-Radio) with GTPv1 routers of UPF and UPF-GR. The UPF and UPF-GR are configured to handle the same GTPv1 Interface IP Address and the same IP Pool from which the User Equipment IPs are allocated.

## Description

### DESCRIPTION OF THE RELATED TECHNOLOGY

### a. Field of the Disclosure

The present disclosure relates to systems and methods for radio access networks. The present disclosure also relates to the design of operation, administration and management of various network elements of a Fifth Generation (5G) New Radio (NR) system.

### b. Description of the Related Art

3GPP Technical Standards provide User Plane Function UPF session restoration procedures. These procedures for UPF failure without restart are implementation specific, and hence do not provide any guidelines for UPF failure without restart. In absence of any guidance from 3GPP Technical Standards, when the UPF fails, the UE must reconnect a session, which impacts the load of connections on all the nodes in the network, including Radio and Core network entities such as Access and Mobility Management Function (AMF) and Session Management Function (SFM). If the UPF fails and becomes active again after a finite time, an operator can select a UPF for the new and existing UE sessions. However, 3GPP Technical Standards have not defined any solution or mechanism for doing so.

### SUMMARY

A method comprising: connecting a User Plane Function (UPF) to a Session Management Function (SMF) via a PFCP-UPF router (PFCP-UPF) N4 interface; connecting a UPF Geographic Redundancy (GR) module (UPF-GR) to a Session Management Function (SMF) via a Packet Forwarding Control Protocol (PFCP) PFCP-UPF-GR router (PFCP-UPF-GR) N4 interface; connecting the UPF to a Radio via a General Packet Radio Service Tunneling Protocol (GTPv1) router (GTPv1-UPF) GTPv1 interface; connecting the UPF-GB to the Radio via a GTPv1 router-UPF-GR (GTPv1-UPF-GR) GTPv1 interface; connecting the Radio to the GTPv1-UPF router and the GTPv1-UPF-GB router via a GTPv1-Radio Router (GTPv1-Radio); connecting the SMF to the PFCP-UPF-GR router and the PFCP-UPF router via a PFCP-SMF router (PFCP-SMF); connecting the UPF and the UPF GR via a dedicated connection for session and state replication; and maintaining the UPF-GR in a hot-standby mode so that sessions at the UPF are also replicated at the UPF-GR. The method can further comprise: configuring the UPF and the UPF-GR to handle a same GTPv1 Interface I Address. The method can further comprise configuring the UPF and the UPF-GR to handle the same IP Pool from which a UE IP is allocated. The method can further comprise configuring the UPF such that the BGP MED values that are installed on the UPF have higher priority than the BGP MED values at the UPF-GR so that that packets routed via the GTPv1 interface and N4 interface are routed to the UPF when both the UPF and the UPF-GR are up. The UPF can be configured to use anycast. The method can further comprise routing, via the PFCP router, a message to the available UPF configured with the higher BGP MED values; and replicating the session information at the UPF-GR at hot standby for the UPF, the SMF having an association setup with an N4 IP Address of UPF. The method can further comprise: routing, via the GTPV1 router, a GTPv1 message to the available UPF configured with the higher BGP MED values; routing user plane packets from Radio to the available UPF configured with the higher BGP MED values; forwarding, by the UPF the user plane packets towards a router for an N6 interface; and replicating the session information at the UPF-GR at hot standby for the UPF.

In an implementation, the method can further comprise writing data to Unstructured Data Storage Function (USDF) UDSF-A on the active UPF; synching the data between UDSF-A and a UDSF-B on the UPF-GR; running a Poll Application module at the UPF-GR in the hot standby mode to recreate the sessions via a configurable timer; after an expiry of the timer expiry, recreate the available sessions available at UPF-GR via the UDSF-B; and for newly created sessions on the UPF-GR, updating the BGP configured the lower BGP MED values at an N6 interface. The method can further comprise, for the GTPv1 and N4 interfaces, advertising a lower BGP MED at a UPF-GR bring up. The method can further comprise: periodically updating the last local timestamp every time period at the UDSF-B of the active hot standby UPF-GR; converting to a local time zone and reading, by the UPF-GB, the last local timestamp; declaring the UPF-GR as active when the Poll Application in UP -GR determines that the timestamp is not updated for a preconfigured value; advertising a higher BGP MED than the one configured at UPF using a BGP update message to the PFCP router, the GTPv1 router, and the N6 interface, so that the packets are routed to UPF-GR; routing, by the PFCP router, the GTPv1 router, and the N6 router, the packets to the UPF GR. The method can further comprise the UPF, before marking itself active, recreating the sessions in the UDSF-A; sending a BGP Update to via PFCP-UPF router and the GTPv1_UPF router, and updating a timestamp in the UDSF-A; synchronizing the UDSF-A and the UDSF-B; reading, by the UPF-GR the timestamp after converting the timestamp to a local time zone identifying, by the UPF-GR, the UPF is up again; updating a usage and usage context back to UDSF-B by the UPF GR; synchronizing the UDSF-B and the UDSF-A; reading the information from the UDSF-A by the UPF; advertising, by the UPF, a higher BGP MED than and BGP MED published by UPF-GR using a BGP update message to the PFCP router, the GTPv1 router, and the N6 interface so that the packets are routed to this UPF; routing packets from the PFCP router, the GTPv1 router, and the N6 interface to the UPF; handling the packets by the UPF by reading the updated usage context; running, by the UPF-GR, the Poll Application to recreate the sessions and resuming a hot standby state, wherein the UPF GR stops the monitoring of the PDRs.

In an implementation, disclosed is a RAN System comprising: a User Plane Function (UPF) module; a Session Management Function (SMF) module; a PFCP-UPF router (PFCP-UPF) connecting the UPF to the SMF via an N4 interface; a UPF Geographic Redundancy (GR) module (UPF-GR) and a Packet Forwarding Control Protocol (PFCP) PFCP-UPF-GR router (PFCP-UPF-GR) connecting the UPF-GR) module (UPF-GR) to the SMF via the N4 interface; a RAN Radio node and General Packet Radio Service Tunneling Protocol (GTPv1) Radio Router (GTPv1-Radio); a UPF GTPv1 router (GTPv1-UPF) connecting the UPF to the RAN Radio node GTPv1-Radio Router via an GTPv1 interface; a UPF-GR GTPv1 router-(GTPv1-UPF-GR) connecting the UPF-GR to the RAN Radio node GTPv1-Radio Router via the GTPv1 interface; a PFCP-SMF router (PFCP-SMF) connecting the SMF to the PFCP-UPF-GR router and the PFCP-UPF router via the N4 interface; and a dedicated connection connecting the UPF module and the UPF GR module for session and state replication, wherein the UPF-GR module is configured to be in a hot-standby mode so that sessions at the UPF module are also replicated at the UPF-GR module. The system can comprise: the UPF module and the UPF-GR module each being configured to handle a same GTPv1 Interface IP Address and each being configured to handle a same IP Pool.

In an implementation, the system of can comprise: the UPF module being configured such that the BGP MED values that are installed on the UPF module have higher priority than the BGP MED values at the UPF-GR module so that that packets routed via the GTPv1 interface and the N4 interface are routed to the UPF module when both the UPF module and the UPF-GR module are up. The UPF module can be configured to use anycast. The system can further comprise: the PFCP router configured to route a message to the available UPF module configured with the higher BGP MED values; and the system can be configured to replicate session information at the UPF-GR module at hot standby for the UPF module, the SMF module having an association setup with an N4 IP Address of UPF module. The system of can further comprise: the GTPV1 router configured to route a GTPv1 message to the available UPF module configured with the higher BGP MED values; the RAN Radio node configured to route user plane packets to the available UPF module configured with the higher BGP MED values;the UPF module configured to forward the user plane packets towards a router for an N6 interface; and the UPF-GR module configured to replicate the session information at the at hot standby for the UPF module.

The system can further comprise: the UPF module configured to write session data to an Unstructured Data Storage Function (USDF) UDSF-A on the UPF module; a USDF on the UPF-GR (USDF-B), the system being configured to synch data between UDSF-A and the UDSF-B; the UPF-GR comprising a Poll Application module and configured to: run at the UPF-GR in the hot standby mode to recreate the sessions via a configurable timer; after an expiry of the timer expiry, recreate the available sessions available at UPF-GR via the UDSF-B; and for newly created sessions on the UPF-GR, update the BGP configured the lower BGP MED values at an N6 interface. The UPF-GR module can be configured to advertise a lower BGP MED for the GTPv1 and N4 interfaces at UPF-GR bring up. The system can further comprise: the UPF-GR module configured to at least: periodically update the last local timestamp every time period at the UDSF-B of the active hot standby UPF-GR module; convert to a local time zone and read the last local timestamp; declare the UPF-GR module as active when the Poll Application module determines that the timestamp is not updated for a preconfigured value; and advertise a higher BGP MED than the one configured at the UPF module using a BGP update message to the PFCP router, the GTPv1 router, and the N6 interface, so that the packets are routed to UPF-GR module; whereby the PFCP router, the GTPv1 router, and the N6 router are each configured to route packets to the UPF GR until the UPF resumes an active state.

The system can further comprise the UPF module being configured to, before marking itself active, recreating the sessions in the UDSF-A; sending a BGP Update to via PFCP-UPF router and the GTPv1_UPF router, and updating a timestamp in the UDSF-A; synchronizing the UDSF-A and the UDSF-B; reading, by the UPF-GR the timestamp after converting the timestamp to a local time zone identifying, by the UPF-GR, the UPF is up again; updating a usage and usage context back to UDSF-B by the UPF GR; synchronizing the UDSF-B and the UDSF-A; reading the information from the UDSF-A by the UPF; advertising, by the UPF, a higher BGP MED than and BGP MED published by UPF-GR using a BGP update message to the PFCP router, the GTPv1 router, and the N6 interface so that the packets are routed to this UPF; routing packets from the PFCP router, the GTPv1 router, and the N6 interface to the UPF; handling the packets by the UPF by reading the updated usage context; and the UPF-GR being configured to run the Poll Application to recreate the sessions and resuming a hot standby state, wherein the UPF GR stops the monitoring of the PDRs.

### BRIEF DESCRIPTION OF THE DRAWINGS

Non-limiting and non-exhaustive embodiments are described with reference to the following drawings. In the drawings, like reference numerals refer to like parts throughout the various figures unless otherwise specified. For a better understanding, reference can be configured to be made to the following Detailed Description, which is to be read in association with the accompanying drawings.

Various embodiments and implementations now will be described more fully hereinafter with reference to the accompanying drawings, which form a part hereof, and which show, by way of illustration, specific embodiments by which the innovations described herein can be practiced. The embodiments can, however, be embodied in many different forms and should not be construed as limited to the embodiments and implementations set forth herein; rather, these embodiments and implementations are provided so that this disclosure will be thorough and complete, and will fully convey the scope of the embodiments and implementations to those skilled in the art. Among other things, the various embodiments and implementations can be methods, systems, media, or devices. The following detailed description is, therefore, not to be taken in a limiting sense.

Throughout the specification and claims, the following terms take the meanings explicitly associated herein, unless the context clearly dictates otherwise. The term "herein" refers to the specification, claims, and drawings associated with the current application.

In addition, as used herein, the term "or" is an inclusive "or" operator, and is equivalent to the term "and/or," unless the context clearly dictates otherwise. The term "based on" is not exclusive and allows for being based on additional factors not described, unless the context clearly dictates otherwise. In addition, throughout the specification, the meaning of "a," "an," and "the" include plural references. The meaning of "in" includes "in" and "on."
FIG. 1A shows a network architecture.
FIG. 1B shows a network architecture.
FIG. 1C shows a network architecture.
FIG. 1D shows a network architecture.
FIG. 2 shows implementation of a network architecture and flow.
FIG. 3 shows an implementation of a network architecture and flow.

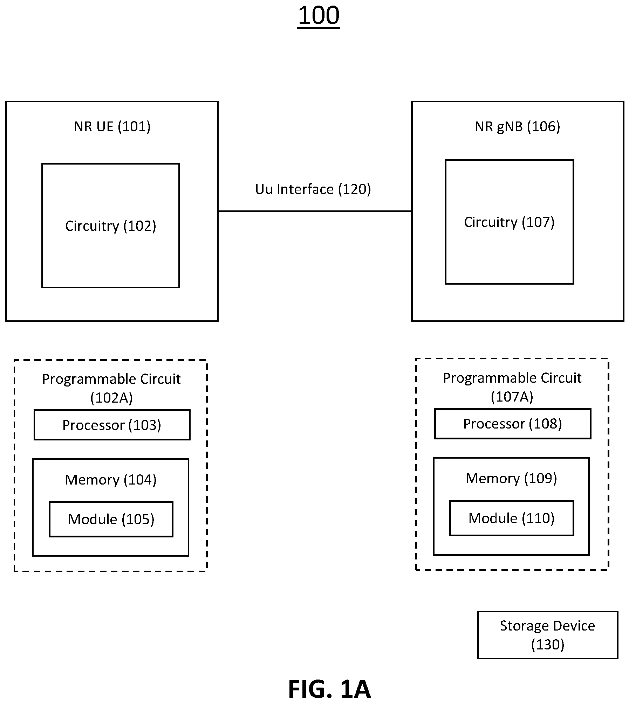

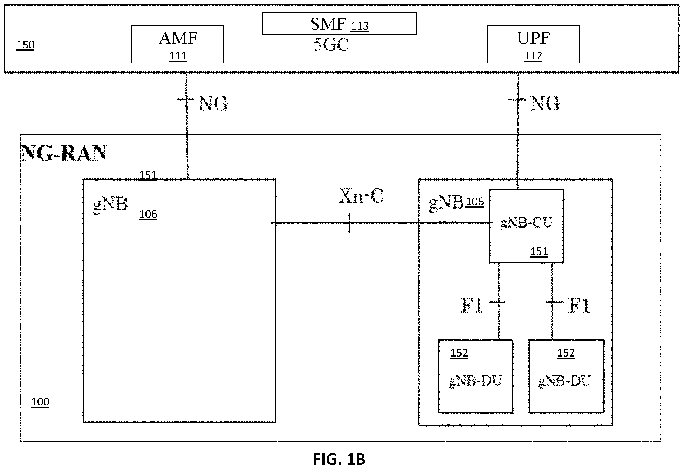

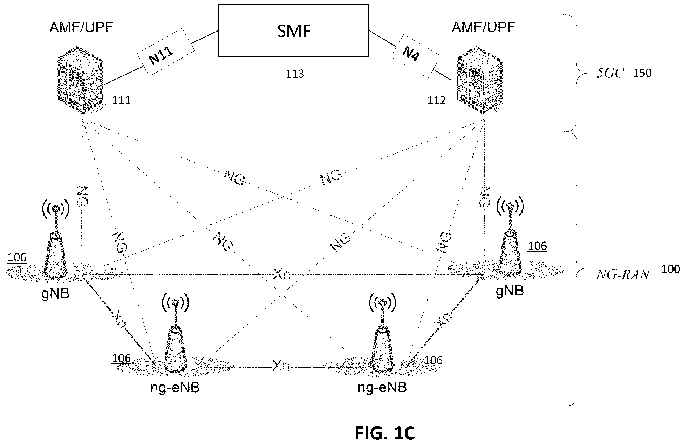

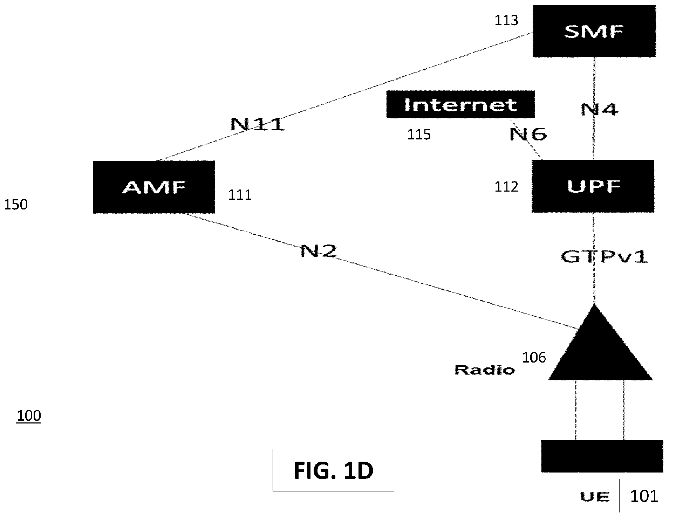

FIG. 1. shows an implementation of a network architecture and flow.

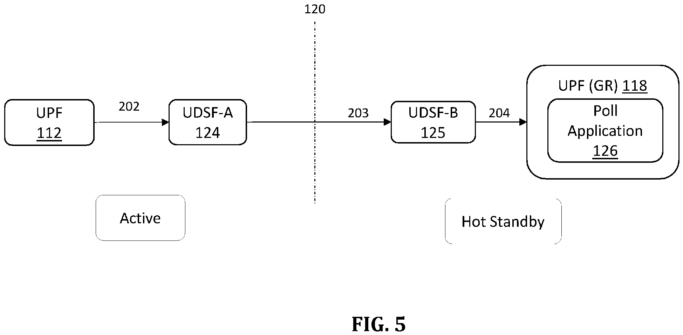

FIG. 5 shows an implementation of a network architecture and flow.

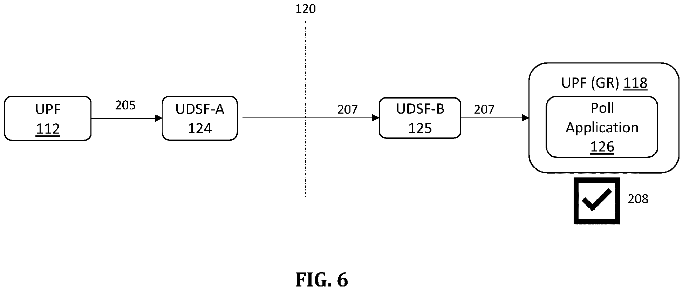

FIG. 6 shows an implementation of a network architecture and flow.

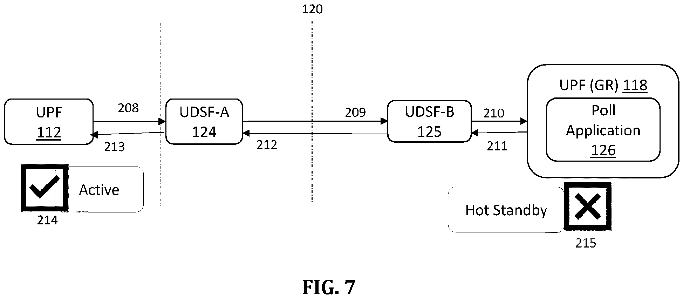

FIG. 7 shows an implementation of a network architecture and flow.

### DETAILED DESCRIPTION OF THE IMPLIMENTATIONS

Reference is made to Third Generation Partnership Project (3GPP) and the Internet Engineering Task Force (IETF) in accordance with embodiments of the present disclosure. The present disclosure employs abbreviations, terms and technology defined in accord with Third Generation Partnership Project (3GPP) and/or Internet Engineering Task Force (IETF) technology standards and papers, including the following standards and definitions. 3GPP and IETF technical specifications (TS), standards (including proposed standards), technical reports (TR) and other papers are incorporated by reference in their entirety hereby, define the related terms and architecture reference models that follow.

### Acronyms

3GPP 3rd Generation Partnership Project
5G 5th Generation
5GC 5G Core Network
5GS 5G System
AMF Access and Mobility Management Function
BGP Border Gateway Protocol
CP Control Plane
E-UTRAN: Evolved Universal Terrestrial Radio Access Network
GTP GPRS Tunneling Protocol
gNB: gNodeB (5G base station)
GPRS General packet radio service
SMF Session Management Function
MED Multi Exit Discriminator
PFCP Packet Forwarding Control Protocol
UE: User Equipment
UDSF Unstructured Data Storage Function
UP User Plane
UPF User Plane Function
xCDR eXtended Cross Datacenter Replication

### References

[1] 3GPP TS 23.501v18.3.0: "System Architecture for the 5G System", (2023-09-19)
[2] 3GPP TS 23.502v18.3.0:"Procedures for the 5G System", (2023-09-19)
[3] 3GPP TS 23.527 v18.1.0: "5G System, Restoration procedures", (20223-09-19)
[4] 3GPP TS 23 007 v18.2.1: "LTE, Restoration procedures", (2023-06-29)
[5] 3GPP TS 29.244v18.3.1:" Interface between the Control Plane and the User Plane Nodes ", (2023-09-20);
[6] 3GPP TS 38.401 v17.6.1: "NG-RAN; Architecture description", (2023-09-22)
[7] (3GPP TS 38.300 17.10.0 "NR; NR and NG-RAN Overall description; Stage-2", (2023-09-27)

### RAN Architectures

FIG. 1A is a block diagram of a system 100 for implementations as described herein. System 100 includes a NR UE 101, a NR gNB 106. The NR UE and NR gNB 106 are communicatively coupled via a Uu interface 120.

NR UE 101 includes electronic circuitry, namely circuitry 102, that performs operations on behalf of NR UE 101 to execute methods described herein. Circuity 102 can be implemented with any or all of (a) discrete electronic components, (b) firmware, and (c) a programmable circuit 102A.

NR gNB 106 includes electronic circuitry, namely circuitry 107, that performs operations on behalf of NR gNB 106 to execute methods described herein. Circuity 107 can be implemented with any or all of (a) discrete electronic components, (b) firmware, and (c) a programmable circuit 107A.

Programmable circuit 107A, which is an implementation of circuitry 107, includes a processor 108 and a memory 109. Processor 108 is an electronic device configured of logic circuitry that responds to and executes instructions. Memory 109 is a tangible, non-transitory, computer-readable storage device encoded with a computer program. In this regard, memory 109 stores data and instructions, i.e., program code, that are readable and executable by processor 108 for controlling operations of processor 108. Memory 109 can be implemented in a random-access memory (RAM), a hard drive, a read only memory (ROM), or a combination thereof. One of the components of memory 109 is a program module, namely module 110. Module 110 includes instructions for controlling processor 108 to execute operations described herein on behalf of NR gNB 106.

The term "module" is used herein to denote a functional operation that can be embodied either as a stand-alone component or as an integrated configuration of a plurality of subordinate components. Thus, each of module 105 and 110 can be implemented as a single module or as a plurality of modules that operate in cooperation with one another.

While modules 110 are indicated as being already loaded into memories 109, and module 110 can be configured on a storage device 130 for subsequent loading into their memories 109. Storage device 130 is a tangible, non-transitory, computer-readable storage device that stores module 110 thereon. Examples of storage device 130 include (a) a compact disk, (b) a magnetic tape, (c) a read only memory, (d) an optical storage medium, (e) a hard drive, (f) a memory unit comprising of multiple parallel hard drives, (g) a universal serial bus (USB) flash drive, (h) a random-access memory, and (i) an electronic storage device coupled to NR gNB 106 via a data communications network.

Uu Interface (120) is the radio link between the NR UE and NR gNB, which is compliant to the 5G NR specification.

UEs 101 can be dispersed throughout a wireless communication network, and each UE can be stationary or mobile. A UE includes: an access terminal, a terminal, a mobile station, a subscriber unit, a station, and the like. A UE can also include be a cellular phone (e.g., a smart phone), a personal digital assistant (PDA), a wireless modem, a wireless communication device, a handheld device, a laptop computer, a cordless phone, a wireless local loop (WLL) station, a tablet, a camera, a gaming device, a drone, a robot/robotic device, a netbook, a smartbook, an ultrabook, a medical device, medical equipment, a healthcare device, a biometric sensor/device, a wearable device such as a smart watch, smart clothing, smart glasses, a smart wristband, and/or smart jewelry (e.g., a smart ring, a smart bracelet, and the like), an entertainment device (e.g., a music device, a video device, a satellite radio, and the like), industrial manufacturing equipment, a global positioning system (GPS) device, or any other suitable device configured to communicate via a wireless or wired medium. UEs can include UEs considered as machine-type communication (MTC) UEs or enhanced/evolved MTC (eMTC) UEs. MTC/eMTC UEs that can be implemented as loT UEs. IoT UEs include, for example, robots/robotic devices, drones, remote devices, sensors, meters, monitors, cameras, location tags, and the like, that can communicate with a BS, another device (e.g., remote device), or some other entity. A wireless node can provide, for example, connectivity for or to a network (e.g., a wide area network such as Internet or a cellular network) via a wired or wireless communication link.

One or more UEs 101 in the wireless communication network can be a narrowband bandwidth UE. As used herein, devices with limited communication resources, e.g. smaller bandwidth, are considered as narrowband UEs. Similarly, legacy devices, such as legacy and/or advanced UEs, can be considered as wideband UEs. Wideband UEs are generally understood as devices that use greater amounts of bandwidth than narrowband UEs.

The UEs 101 are configured to connect, for example, communicatively couple, with an or RAN. In embodiments, the RAN can be an NG RAN or a 5G RAN, an E-UTRAN, an MF RAN, or a legacy RAN, such as a UTRAN or GERAN. The term "NG RAN" or the like refers to a RAN 110 that operates in an NR or 5G system, the term "E-UTRAN" or the like refers to a RAN that operates in an LTE or 4G system, and the term "MF RAN" or the like refers to a RAN that operates in an MF system 100. The UEs 101 utilize connections (or channels), respectively, each of which comprises a physical communications interface or layer. The connections and can comprise several different physical DL channels and several different physical UL channels. As examples, the physical DL channels include the PDSCH, PMCH, PDCCH, EPDCCH, MPDCCH, R-PDCCH, SPDCCH, PBCH, PCFICH, PHICH, NPBCH, NPDCCH, NPDSCH, and/or any other physical DL channels mentioned herein. As examples, the physical UL channels include the PRACH, PUSCH, PUCCH, SPUCCH, NPRACH, NPUSCH, and/or any other physical UL channels mentioned herein.

The RAN can include one or more AN nodes or RAN nodes. These access nodes can be referred to as BS, gNBs, RAN nodes, eNBs, NodeBs, RSUs, MF-APs, TRxPs or TRPs, and so forth, and comprise ground stations (e.g., terrestrial access points) or satellite stations providing coverage within a geographic area (e.g., a cell). The term "NG RAN node" or the like refers to a RAN node that operates in an NR or 5G system (e.g., a gNB), and the term "E-UTRAN node" or the like refers to a RAN node that operates in an LTE or 4G system (e.g., an eNB). According to various embodiments, the RAN nodes can be implemented as one or more of a dedicated physical device such as a macrocell base station, and/or a low power base station for providing femtocells, picocells or other like cells having smaller coverage areas, smaller user capacity, or higher bandwidth compared to macrocells.

In some embodiments, all or parts of the RAN nodes can be implemented as one or more software entities running on server computers as part of a virtual network, which can be referred to as a CRAN and/or a vBBU. In these embodiments, the CRAN or vBBU can implement a RAN function split, such as a PDCP split wherein RRC and PDCP layers are operated by the CRAN/vBBU and other L2 protocol entities are operated by individual RAN nodes; a MAC/PHY split where RRC, PDCP, RLC, and MAC layers are operated by the CRAN/vBBU and the PHY layer is operated by individual RAN nodes; or a "lower PHY" split where RRC, PDCP, RLC, MAC layers and upper portions of the PHY layer are operated by the CRAN/vBBU and lower portions of the PHY layer are operated by individual RAN nodes. This virtualized framework allows the freed-up processor cores of the RAN nodes to perform other virtualized applications. In some implementations, an individual RAN node can represent individual gNB-DUs that are connected to a gNB-CU 151via individual F1 interfaces. In these implementations, the gNB-DUs can include one or more remote radio heads (RRH), and the gNB-CU 151can be operated by a server that is located in the RAN or by a server pool in a similar manner as the CRAN/vBBU. One or more of the RAN nodes can be next generation eNBs (ng-eNBs), which are RAN nodes that provide E-UTRA user plane and control plane protocol terminations toward the UEs 101, and are connected to a 5GC via an NG interface. In MF implementations, the MF-APs are entities that provide MultiFire radio services, and can be similar to eNBs in an 3GPP architecture.

In some implementations, access to a wireless interface can be scheduled, wherein a scheduling entity (e.g.: BS, gNB, and the like) allocates bandwidth resources for devices and equipment in its service area or cell. As scheduling entity can be configured to schedule, assign, reconfigure, and release resources for one or more subordinate entities. In some examples, a UE 101 (or other device) can function as master node scheduling entity, scheduling resources for one or more secondary node subordinate entities (e.g., one or more other UEs 101). Thus, in a wireless communication network with a scheduled access to time-frequency resources and having a cellular configuration, a P2P configuration, and a mesh configuration, a scheduling entity and one or more subordinate entities can communicate utilizing the scheduled resources.

An NG-RAN (NG-Radio Access Network) architecture from 3GPP TS 38.401 [6] is described below with respect to FIG. 1B. F1 is the interface between gNB-CU 151 (gNB - Centralized Unit) and gNB-DU 152 (gNB - Distributed Unit), NG is the interface between gNB-CU 151 (or gNB) and 5GC (5G Core), E1 is the interface between CU-CP (CU-Control Plane) and CU-UP (CU-User Plane), and Xn is interface between gNBs.

An E-UTRAN architecture is illustrated in Fig. 1C. E-UTRAN that supports an NG-RAN architecture. An exemplary NG-RAN Radio node 106 is either: a gNB, providing NR user plane and control plane protocol terminations towards the UE; or an ng-eNB, providing E-UTRA user plane and control plane protocol terminations towards the UE. ([7] 3GPP TS 38.300 17.3.0.) As shown in Figure 1C, the gNBs and ng-eNBs are interconnected with each other by means of the Xn interface.

In Figs. 1B-1C, the NG-RAN Radio Node (e.g.: gNBs and/or ng-eNBs) are also connected by means of the NG interfaces to the 5GC, more specifically to the AMF (Access and Mobility Management Function) by means of the NG-C interface and to the UPF (User Plane Function) by means of the NG-U interface. The gNB and ng-eNB host functions for Radio Resource Management such as: Radio Bearer Control, Radio Admission Control, Connection Mobility Control, Dynamic allocation of resources to UEs in both uplink and downlink (scheduling), connection setup and release; session Management; QoS Flow management and mapping to data radio bearers.

3GPP TS 23.501v16.2.0 [1] and 3GPP TS 23.502v16.2.0 [2] have defined a network architecture where a UPF is connected as a core network to transfer the user plane packets sent or to be received by UE. FIG. 1D shows an exemplary network architecture in accord with these Technical Standards.

The core 5G network 150 includes AMF 111, other AMFs 111, a Session Management Function (SMF) 113, and a User Plane Function (UPF) 112. The AMF 111 acts as a control node that processes the signaling between the UEs 101 and the core 5G network 150 to provide QoS flow and session management. For example, the AMF 111 provides management for registration, connection management, reachability management, and mobility.

SMF 113 provides Session Management such as session establishment, modification and release, tunnel maintenance between UPF 112 and RAN node 106, UE IP address allocation and management, and traffic steering at UPF 112 to route traffic to proper destination.

User Internet protocol (IP) packets are transferred through the UPF 112. The UPF 112 provides UE IP address allocation, packet routing and forwarding, packet inspection, QoS handling for user plane, as well as other functions. The UPF 112 is connected to the IP Services 115 such as Internet, an intranet, an IP Multimedia Subsystem (IMS), a PS Streaming Service, and/or other IP services.

For UPF 112 communications, two restoration mechanisms are required: one due to restart of UPF 112 node and another due to UPF 112 failure. The difference between restart and failure is that in restart, UPF 112 is expected to come up within a predefined finite time. However, in case of failure, the UPF 112 may not come up at all or may come up in an undefined time.

3GPP TS 23.527 v16.4.0 [3] defines procedures where SMF 113 can detect UPF 112 restart and initiate recovery procedures. However, for UPF 112 failure scenarios, no new procedures are defined, and this is left to implementing providers.

Accordingly described are procedures for session continuity with geographical redundancy for the UPF 112 failure scenarios.

### Detection of UPF Restart and Failure

3GPP TS 23.527 v16.4.0 [3] and 3GPP TS 23.007 v17.4.1 [4] have defined a procedure to detect the UPF 112 restart. The below section defines the handling as per these 3GPP Technical Standards. The reference node for the interface used between SMF 113 and UPF 112 is PFCP N4 interface. On the N4 interface, SMF 1113 utilizes PFCP Heartbeat Request and Heartbeat Response messages to detect UPF 113 failure or restart.

UPF 112 receives a PFCP Heartbeat Request message (see 3GPP TS 29.244v16.3.1 [5]) at any time from the SMF 113 and replies with a PFCP Heartbeat Response message. Here, UPF 112 maintains two Recovery Time Stamps: -
a remote Recovery Time Stamp of SMF 113, that it has received during the association procedures; and
a local recovery Time Stamp that was sent to SMF 113 during association procedures.

After UPF 112 has restarted, it updates all local Recovery Time Stamps and clears all remote Recovery Time Stamps. When SMF 113 information is available again, i.e.: when the PFCP Association is alive, the restarted UPF 112 sends updated Recovery Time Stamps in a Heartbeat Request message to the SMF 113 before initiating any PFCP session signaling.

The SMF 113, on receiving Recovery Time Stamp Information Element from UPF 112, compares received remote Recovery Time Stamp value with the previous Recovery Time Stamp value stored for the UPF 112. It does the following:

If no previous value was stored, the Recovery Time Stamp value received in the Heartbeat Request or Response messages is stored for this UPF 112.

If the value of a Recovery Time Stamp previously stored for this UPF is smaller than the Recovery Time Stamp value received in the Heartbeat Request or Response messages, the SMF 113 indicates that the UPF 112 has restarted. The SMF 113 then saves the new Recovery Time Stamp value for this UPF.

If the value of a Recovery Time Stamp previously stored for this UPF 112 is larger than the Recovery Time Stamp value received in the Heartbeat Request, or Response message indicates a possible race condition (i.e.: a newer message has come before the older message), SMF 113 ignores the received new Recovery Time Stamp value.

For UPF 112 failure, SMF 113 keeps on pinging the UPF 112 using Heartbeat and keeps on logging the status the same for a preconfigured time. If UPF 112 does not comes back up within this preconfigured time, the SMF 113 can indicate that UPF has failed.

### Session Restoration of UPF Restart and Failure

3GPP TS 29.244v16.3.1 [3] also provides UPF restoration procedures. A mechanism of handling restoration in accord with the Technical Standard is described below.

Restart Case: here, after restart of UPF 112, in accord with 3GPP, the PFCP association between the SMF(s) 113 and the UPF 112 must be re-established. Once the association is reestablished, restoration of the PFCP sessions is started immediately in Proactive and Reactive modes:
- In Proactive mode, the restoration is initiated by SMF 113, where it starts reestablishing PFCP sessions matching any PDRs.
- In Reactive mode, the restoration is initiated by SMF 113, where it initiates a message to establish PFCP session with a wildcarded PDR to instruct the UPF 112 to forward G-PDU packets that are not matching any other PDRs.
Failure Case: in 3GPP TS 29.244v16.3.1 [3], procedures for UPF 112 failure without restart are implementation specific, and hence it does not provide any guidelines for UPF failure without restart.

As noted herein, in the absence of any guidance from 3GPP Technical Standards, when the UPF 112 fails, the UE 101 must reconnect the session, which impacts the load of connections on all the nodes in the network, including Radio and Core network entities such as AMF 111 and SMF 113. In case of UPF 112 failure, the UE(s) 101 that already have active sessions have to reconnect the session, which also impacts the load of connections on all the nodes in the network, including Radio and Core network entities AMF 111 and SMF 113, as a bulk of re-connects will be initiated. If the UPF 112 fails and becomes active again after a finite time (e.g.: 1 hour or more) the operator can select the UPF 112 for the new and existing UE 101 sessions. However, 3GPP Technical Standards have not defined any solution or mechanism for doing so. The present disclosure provides implementations that advantageously provide such solutions.

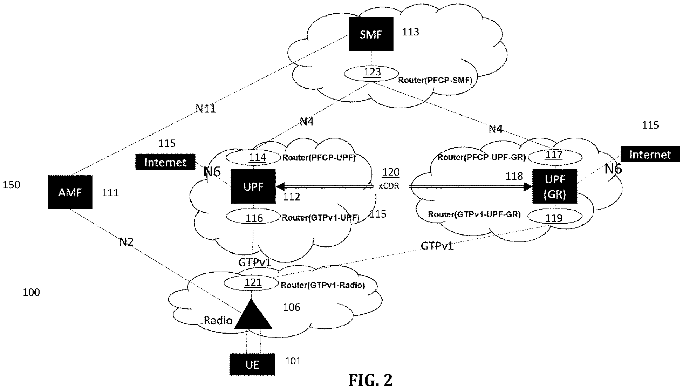

In an implementation, FIG. 2: shows a deployment for User Plane geo-redundancy with session continuity.

### Setup

As part of the setup, available routers on PFCP N4 and GTPv1 sides are introduced in the network. A UPF Geographic Redundancy (GR) 118 is introduced in the setup. A UPF 112 is connected via the Router PFCP-UPF 114 to the SMF 113 and via the Router GTPv1-UPF 116 to the RAN Radio Node 106. A UPF (GR) 118 is connected via the Router PFCP-UPF-GR 117 to the SMF and via the Router GTPv1-UPF-GR 119 to the RAN node 106. The UPF (GR) 118 is kept in a hot-standby mode. This means all the sessions that are created, modified, or deleted at the UPF 112 are also created, modified, and deleted at UPF (GR) 118. The UPF 112 and UPF (GR) 118 are connected via a dedicated connection (xCDR) 120 for session and state replication. The UPF 112 and UPF (GR) 118 are configured with same N4 IP Address. The SMF 113 is connected via Router (PFCP-SMF) 123 with PFCP routers of UPF 114 and UPF(GR) 117. The RAN node 106 is connected via Router (GTPv1-Radio) 121 with GTPv1 routers of UPF 116 and UPF(GR) 119. The UPF 112 and UPF(GR) 118 are configured to handle the same GTPv1 Interface IP Address. The UPF 112 and UPF(GR) 114 are configured to handle the same IP Pool (i.e.: IP Pool from which the UE IP are allocated).

The BGP MED values that are installed on the UPF side have higher priority than the BGP MED values at the UPF (GR). This ensures that all packets (GTPv1 and PFCP) are routed to the UPF 112 when both UPF 112 and UPF (GR) 118 are up.

UPF 112 and UPF-GR118 shall use anycast IP on the interfaces. Using anycast IP, all the N3/N4/N9/N6 interfaces can be anycast IP. The anycast IP address is a unique address that is assigned to interfaces. As such, when any peer (e.g. SMF 113 or RAN node 106) sends a request to an anycast IP address, the respective router routes the request to the interface that holds that IP address. Anycast IP prevents UPF 112 from being in a hot standby mode as traffic is distributed to the active node. While in traditional standby setup, a node remains idle until it needs to take over when the active node fails. But, with anycast IP allocated to the interface, the same IP address is shared, and the router sends the traffic to the nearest active UPF 112.

### PFCP Message Routing (to UPF 112 with higher MED)

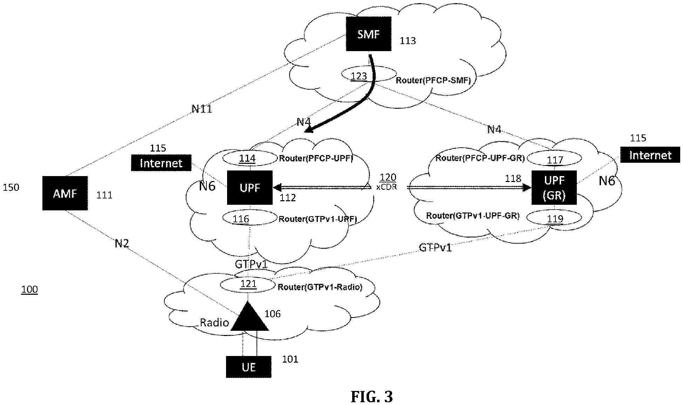

In an implementation, FIG. 3 shows an example of routing of PFCP messages to UPF 112 as it has higher MED. The SMF 113 has an associated setup with N4 IP Address of UPF 112. The Router PFCP-SMF 113 routes the message to UPF 112, as it has higher MED and available. Since UPF-GR 118 site is hot standby for UPF 112, all the sessions are replicated at UPF-GR 118 site. The N4 Association and session information are replicated at the UPF-GR 118.

### GTPv1 Packet Routing (to UPF with higher MED)

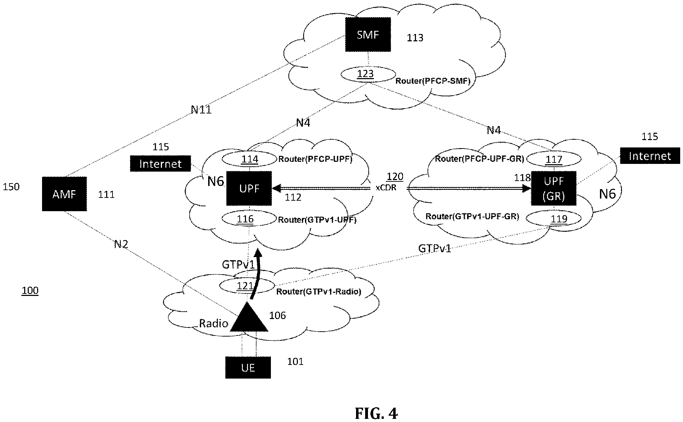

In an implementation, FIG. 4 shows an example of routing of GTPv1 messages to UPF 112 as it has higher MED. The Router GTPV1-UPF 116 routes the user plane packets from Radio to UPF 112, as it has higher MED. The UPF 112 forwards the packets towards Router GTPv1-UPF 116 for the N6 interface. Since UPF-GR 118 site has hot standby for UPF 112, all the sessions are replicated at UPF-GR 118.

### Session Replication over xCDR

In an implementation, FIG. 5 shows an example of Session Replication over xCDR 120. As shown in FIG. 5, at 202 UPF 112 on the active site writes the data to UDSF-A 124. At 203 data is synched between UDSF-A 124 and UDSF-B 125. t 204, the UPF (GR) 118 in a hot standby mode, runs a Poll Application 126 to recreate the sessions (via a configurable timer=Default 1 minute). After every timer expiry, the UPF (GR) 118 goes to UDSF-B 125 and recreates the available sessions. For newly created sessions on the UPF (GR) 118, BGP updates happen (with configured lower MED) on the N6 side. For the GTPv1 and N4 interfaces, a lower MED advertisement happens at the UPF (GR) 118 bring up. The UPF (GR) 118 can be configured n to not perform data counting and measurement until it is made aware that it is active, as described below.

### Session Replication (Making Hot Standby site active)

In an implementation, FIG. 6 shows an example of Session Replication where the Hot Standby site is active. As shown at 205, the UPF 112 in an active site can also be configured to periodically update the last local timestamp every time period (e.g. every 1 second), which can be preconfigured. At 206, the timestamp is synced in UDSF-B 125. At 207 the UPF (GR) 118 reads the timestamp after converting it to a local time zone. If the Poll Application 126 in UPF (GR) 118 determines that the timestamp is not updated for the configured value (default=5 sec), at 208 the UPF (GR) 118 declares itself as active and ready to handle the traffic. The UPF (GR) 118 advertises a higher MED (than the one configured at UPF 112) using the BGP update message to routers PFCP-UPF-GR 117 and GTPV1-UPF-GR 119. BGP so that the packets are immediately routed to UPF (GR) 118. Packets (PFCP, GTPv1 and N6) then start coming to the UPF (GR) 118. The update is also sent towards the router on the internet 115 side in the Session Replication (putting the site in Hot Standby again).

In an implementation, FIG. 7 shows an example of Session Replication where the Hot Standby site placed into standby again. Before marking itself active in UDSF-A 124, at 208 UPF 112 recreates the sessions using UDSF-A and sends BGP Update to all next hop routers it is connected to (e.g.: PFCP-SMF, GTPv1-Radio, N6) and then updates the timestamp in UDSF-A 124. At 209, synchronization happens between UDSF-A124 and UDSF-B 125. At 210, UPF (GR) 118 reads the timestamp after converting it to local time zone. UPF (GR) identifies that the UPF 112 is up again. At 211, UPF (GR) updates the usage and usage context back to UDSF-B 125. At 212, synchronization happens between UDSF-B and UDSF-A.

At 213 the UPF 112 reads the information from the UDSF-A. At 214, the UPF 112 advertises a higher MED than the one published by UPF (GR) 118 using the BGP update message to all the routers it is connected to (e.g.: PFCP-SMF 114, GTPv1-UPF j116 --which in turn updates GTPv1-Radio 121, N6), so that the packets are immediately routed to this UPF 112. Packets (PFCP, GTPv1 and N6) then start coming to this UPF 112. The UPF 112 handles the traffic by reading the updated contexts. At 215 the UPF (GR) 118 stops the monitoring of the PDRs and instead runs a Poll Application to recreate the sessions and starts working in Hot standby again.

An exemplary advantage from the implementations described herein is that the implementations do not introduce any changes on associate nodes in the network such as the AMF 111, SMF 112 and RAN node 106. Instead, when UPF 112 goes into redundancy, it can take care of all the procedures of session re-creation and handling. Another exemplary advantage is that these implementations handle the failure of a UPF 112 so that UE(s) 101 attached to this UPF 112 do not have to re-create the sessions, which would otherwise cause other nodes AMF 111, SMF 113 and RAN node 106 to flood with re-create requests.

It will be understood that implementations and embodiments can be implemented by computer program instructions. These program instructions can be provided to a processor to produce a machine, such that the instructions, which execute on the processor, create means for implementing the actions specified herein. The computer program instructions can be executed by a processor to cause a series of operational steps to be performed by the processor to produce a computer-implemented process such that the instructions, which execute on the processor to provide steps for implementing the actions specified. Moreover, some of the steps can also be performed across more than one processor, such as might arise in a multi-processor computer system or even a group of multiple computer systems. In addition, one or more blocks or combinations of blocks in the flowchart illustration can also be performed concurrently with other blocks or combinations of blocks, or even in a different sequence than illustrated without departing from the scope or spirit of the disclosure.

## Claims

1. A method comprising:
connecting a User Plane Function (UPF) to a Session Management Function (SMF) via a PFCP-UPF router (PFCP-UPF) N4 interface;
connecting a UPF Geographic Redundancy (GR) module (UPF-GR) to a Session Management Function (SMF) via a Packet Forwarding Control Protocol (PFCP) PFCP-UPF-GR router (PFCP-UPF-GR) N4 interface;
connecting the UPF to a Radio via a General Packet Radio Service Tunneling Protocol (GTPv1) router (GTPv1-UPF) GTPv1 interface;
connecting the UPF-GB to the Radio via a GTPv1 router-UPF-GR (GTPv1-UPF-GR) GTPv1 interface;
connecting the Radio to the GTPv1-UPF router and the GTPv1-UPF-GB router via a GTPv1-Radio Router (GTPv1-Radio);
connecting the SMF to the PFCP-UPF-GR router and the PFCP-UPF router via a PFCP-SMF router (PFCP-SMF);
connecting the UPF and the UPF GR via a dedicated connection for session and state replication; and
maintaining the UPF-GR in a hot-standby mode so that sessions at the UPF are also replicated at the UPF-GR.

2. The method of claim 1, comprising:
configuring the UPF and the UPF-GR to handle a same GTPv1 Interface IP Address.

3. The method of claims 1 or 2, comprising:
configuring the UPF and the UPF-GR to handle the same IP Pool from which a UE IP is allocated.

4. The method of any of the above claims, further comprising:
configuring the UPF so that the BGP MED values that are installed on the UPF have higher priority than the BGP MED values at the UPF-GR so that that packets routed via the GTPv1 interface and N4 interface are routed to the UPF when both the UPF and the UPF-GR are up;

5. The method of claim 4, further comprising:
routing, via the PFCP router, a message to the available UPF configured with the higher BGP MED values; and
replicating the session information at the UPF-GR at hot standby for the UPF, the SMF having an association setup with an N4 IP Address of UPF;
or
routing, via the GTPV1 router, a GTPv1 message to the available UPF configured with the higher BGP MED values;
routing user plane packets from Radio to the available UPF configured with the higher BGP MED values;
forwarding, by the UPF the user plane packets towards a router for an N6 interface; and
replicating the session information at the UPF-GR at hot standby for the UPF.

6. The method of any of the above claims, wherein UPF is configured to use anycast.

7. The method of any of the above claims, further comprising:
writing data to Unstructured Data Storage Function (USDF) UDSF-A on the active UPF;
synching the data between UDSF-A and a UDSF-B on the UPF-GR;
running a Poll Application module at the UPF-GR in the hot standby mode to recreate the sessions via a configurable timer;
after an expiry of the timer expiry, recreate the available sessions available at UPF-GR via the UDSF-B; and
for newly created sessions on the UPF-GR, updating the BGP configured the lower BGP MED values at an N6 interface;
the method preferably further comprising:
for the GTPv1 and N4 interfaces, advertising a lower BGP MED at a UPF-GR bring up; and/or
periodically updating the last local timestamp every time period at the UDSF-B of the active hot standby UPF-GR;
converting to a local time zone and reading, by the UPF-GB, the last local timestamp;
declaring the UPF-GR as active when the Poll Application in UP -GR determines that the timestamp is not updated for a preconfigured value;
advertising a higher BGP MED than the one configured at UPF using a BGP update message to the PFCP router, the GTPv1 router, and the N6 interface, so that the packets are routed to UPF-GR; and
routing, by the PFCP router, the GTPv1 router, and the N6 router, the packets to the UPF GR.

8. The method of claim 8, further comprising:
the UPF, before marking itself active, recreating the sessions in the UDSF-A;
sending a BGP Update to via PFCP-UPF router and the GTPv1_UPF router, and
updating a timestamp in the UDSF-A;
synchronizing the UDSF-A and the UDSF-B;
reading, by the UPF-GR the timestamp after converting the timestamp to a local time zone;
identifying, by the UPF-GR, the UPF is up again;
updating a usage and usage context back to UDSF-B by the UPF GR;
synchronizing the UDSF-B and the UDSF-A;
reading the information from the UDSF-A by the UPF;
advertising, by the UPF, a higher BGP MED than and BGP MED published by UPF-GR using a BGP update message to the PFCP router, the GTPv1 router, and the N6 interface so that the packets are routed to this UPF;
routing packets from the PFCP router, the GTPv1 router, and the N6 interface to the UPF;
handling the packets by the UPF by reading the updated usage context;
running, by the UPF-GR, the Poll Application to recreate the sessions; and
resuming a hot standby state, wherein the UPF GR stops the monitoring of the PDRs.

9. A RAN System comprising:
a User Plane Function (UPF) module;
a Session Management Function (SMF) module;
a PFCP-UPF router (PFCP-UPF) connecting the UPF to the SMF via an N4 interface;
a UPF Geographic Redundancy (GR) module (UPF-GR) and a Packet Forwarding Control Protocol (PFCP) PFCP-UPF-GR router (PFCP-UPF-GR) connecting the UPF-GR) module (UPF-GR) to the SMF via the N4 interface;
a RAN Radio node and General Packet Radio Service Tunneling Protocol (GTPv1) Radio Router (GTPv1-Radio);
a UPF GTPv1 router (GTPv1-UPF) connecting the UPF to the RAN Radio node GTPv1-Radio Router via an GTPv1 interface;
a UPF-GR GTPv1 router-(GTPv1-UPF-GR) connecting the UPF-GR to the RAN Radio node GTPv1-Radio Router via the GTPv1 interface;
a PFCP-SMF router (PFCP-SMF) connecting the SMF to the PFCP-UPF-GR router and the PFCP-UPF router via the N4 interface; and
a dedicated connection connecting the UPF module and the UPF GR module for session and state replication, wherein the UPF-GR module is configured to be in a hot-standby mode so that sessions at the UPF module are also replicated at the UPF-GR module.

10. The system of claim 9, wherein:
the UPF module and the UPF-GR module are each configured to handle a same GTPv1 Interface IP Address and each is configured to handle a same IP Pool.

11. The system of claims 9 or 10, further comprising:
the UPF module being configured so that the BGP MED values that are installed on the UPF module have higher priority than the BGP MED values at the UPF-GR module so that that packets routed via the GTPv1 interface and the N4 interface are routed to the UPF module when both the UPF module and the UPF-GR module are up.

12. The system of claim 11, wherein:
the PFCP router is configured to route a message to the available UPF module configured with the higher BGP MED values; and
the system is configured to replicate session information at the UPF-GR module at hot standby for the UPF module, the SMF module having an association setup with an N4 IP Address of UPF module;
or
the GTPV1 router is configured to route a GTPv1 message to the available UPF module configured with the higher BGP MED values;
the RAN Radio node is configured to route user plane packets to the available UPF module configured with the higher BGP MED values;
the UPF module is configured to forward the user plane packets towards a router for an N6 interface; and
the UPF-GR module is configured to replicate the session information at the at hot standby for the UPF module.

13. The system of any of claims 9-12, wherein UPF module is configured to use anycast.

14. The system of any of claims 9-13, wherein:
the UPF module is configured to write session data to an Unstructured Data Storage Function (USDF) UDSF-A on the UPF module;
a USDF is on the UPF-GR (USDF-B), the system is configured to synch data between UDSF-A and the UDSF-B;
the UPF-GR comprises a Poll Application module and configured to:
run at the UPF-GR in the hot standby mode to recreate the sessions via a configurable timer;
after an expiry of the timer expiry, recreate the available sessions available at UPF-GR via the UDSF-B; and
for newly created sessions on the UPF-GR, update the BGP configured the lower BGP MED values at an N6 interface.

15. The system of claim 14, wherein:
the UPF-GR module is configured to advertise a lower BGP MED for the GTPv1 and N4 interfaces at UPF-GR bring up; and/or
the UPF-GR module is configured to at least:
periodically update the last local timestamp every time period at the UDSF-B of the active hot standby UPF-GR module;
convert to a local time zone and read the last local timestamp;
declare the UPF-GR module as active when the Poll Application module determines that the timestamp is not updated for a preconfigured value; and
advertise a higher BGP MED than the one configured at the UPF module using a BGP update message to the PFCP router, the GTPv1 router, and the N6 interface, so that the packets are routed to UPF-GR module;
whereby the PFCP router, the GTPv1 router, and the N6 router are each configured to route packets to the UPF GR until the UPF resumes an active state.
